(19) Europäisches Patentamt
European Patent Office
Office européen des brevets

(11) **EP 2 986 377 B1**

(12) **EUROPÄISCHE PATENTSCHRIFT**

(45) Veröffentlichungstag und Bekanntmachung des Hinweises auf die Patenterteilung:
**06.05.2020 Patentblatt 2020/19**

(21) Anmeldenummer: **14722544.5**

(22) Anmeldetag: **15.04.2014**

(51) Int Cl.:
*B01J 35/00* (2006.01)        *B01J 37/00* (2006.01)
*B01J 37/02* (2006.01)        *B01J 2/00* (2006.01)
*B05B 1/00* (2006.01)

(86) Internationale Anmeldenummer:
**PCT/EP2014/001005**

(87) Internationale Veröffentlichungsnummer:
**WO 2014/170012 (23.10.2014 Gazette 2014/43)**

(54) **VERFAHREN UND VORRICHTUNG ZUR HERSTELLUNG VON SCHALENKATALYSATOREN**

METHOD AND DEVICE FOR PRODUCING SHELL CATALYSTS

PROCÉDÉ ET DISPOSITIF DE FABRICATION DE CATALYSEURS ENROBÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.04.2013 DE 102013006794**

(43) Veröffentlichungstag der Anmeldung:
**24.02.2016 Patentblatt 2016/08**

(73) Patentinhaber: **thyssenkrupp Industrial Solutions AG**
**45143 Essen (DE)**

(72) Erfinder:
• **NOLL, Oliver**
**44579 Castrop-Rauxel (DE)**

• **WALTHER, Guido**
**51371 Leverkusen (DE)**
• **EVERT, Sigrid**
**15806 Zossen (DE)**
• **MARTIN, Andreas**
**12524 Essen (DE)**

(74) Vertreter: **thyssenkrupp Intellectual Property GmbH**
**ThyssenKrupp Allee 1**
**45143 Essen (DE)**

(56) Entgegenhaltungen:
**EP-A1- 0 599 193        DE-A1- 10 127 232**
**DE-A1-102005 038 453    US-A1- 2012 263 864**

## Beschreibung

Die vorliegende Erfindung betrifft ein Verfahren und eine Vorrichtung zur Herstellung von Schalenkatalysatoren. Damit können Imprägnierungen von Trägermaterialien unterschiedlichster Form durchgeführt werden und es können Schalenkatalysatoren mit unterschiedlicher Eindringtiefe von katalytisch aktivem Material in die Träger erzeugt werden.

Schalenkatalysatoren und unterschiedliche Herstellungsverfahren dafür sind bekannt.

Gewöhnlich werden Katalysatorträger unterschiedlichster Form mit einer flüssigen Zusammensetzung getränkt, die mit einem katalytisch aktivem Material und/oder einem Vorläufer davon angereichert ist.

Bei dem Tränken der Katalysatorträger mit der flüssigen Zusammensetzung gelangen die katalytisch aktiven Komponenten und/oder deren Vorläufer auf die Oberfläche der Katalysatorträger, aber auch in feine Kanäle bei poröser Struktur des Trägermaterials. Ein Beispiel für eine Imprägnierungsmethode ist die trockene Imprägnierung ("incipientwetness" Verfahren). Dabei wird ein poröses Trägermaterial mit einer flüssigen Zusammensetzung imprägniert, die gerade so viel Flüssigkeit enthält, die höchstens dem Gesamtporenvolumen des Trägermaterials entspricht. Nach Aufnahme der flüssigen Zusammensetzung in den Poren des Trägermaterials erscheint dieses trocken.

Beim Einsatz von Reaktanden bzw. beim Erzeugen von Reaktionsprodukten ist es oft nicht oder kaum möglich, dass diese hin oder von der katalytisch aktiven Komponente weg diffundieren. Katalytisch aktive Komponenten in engen offenen Poren des Trägermaterials nehmen in solchen Fällen nicht oder nur eingeschränkt an der Reaktion teil oder die durch Diffusion bedingte lange Verweilzeit in den Poren provoziert ungewünschte Nebenreaktionen. Daher ist es erwünscht, die preisintensive aktive Komponente möglichst vollständig auf der Oberfläche oder in der Nähe der Oberfläche des Trägermaterials abzuscheiden, wobei im weiteren Sinne eine um das Trägermaterial bzw. in den obersten Schichten des Trägermaterials aus wenigen Atomlagen bestehende Schale aus Aktivkomponente entsteht oder auf der Oberfläche bzw. in den oberen Lagen der Oberfläche des Trägermaterials sich einzelne Ansammlungen von Partikeln aus Aktivkomponente ausbilden.

Aus der Literatur sind unterschiedliche Verfahren zur Herstellung sogenannter Schalenkatalysatoren bekannt. Bei typischen Sprühimprägnierungen, wie etwa beschrieben in der EP 0 599 193 A1, werden in einem Rührkessel Katalysatorträger vorgelegt, durch Rotation des Rührkessels durchmischt und mit der Imprägnierlösung derartig besprüht, dass die flüssige Phase der Lösung schnell verdunsten kann. Auf diese Weise lassen sich größere Chargen von Schalenkatalysatoren mit respektabler Gleichmäßigkeit sprühimprägnieren.

Weitere Verfahren zum Aufbringen von katalytisch aktiven Spezies auf einen Katalysatorträger sind bekannt aus den EP 2 420 317 A1, EP 0 672 450 A1, DE 28 14 262 A1, DE 197 34 974 A1 und DE 197 34 975 A1.

Aus der DE 102 33 864 A1 sind ein Verfahren und eine Vorrichtung zur Herstellung pulverförmiger Produkte bekannt, bei denen flüssige Wirkstoffe zerstäubt und auf ein Trägermaterial aufgebracht werden. Dabei werden der Wirkstoff mit einem unter Druck stehenden, in flüssigem, Überkritischem oder gasförmigem Zustand vorliegenden Zerstäubermedium in getrennten Produktströmen zu einer Mehrstoffdüse geführt und anschließend wird das Zerstäubermedium entspannt und dabei der Wirkstoff sehr fein zerstäubt. Daran anschließend wird der zerstäubte Wirkstoff einem Trägermaterial zugeführt. Die Vorrichtung wird insbesondere für Anwendungen in der Lebensmitteltechnik und der Pharmazie vorgeschlagen.

In der US 4,858,552 A1 wird eine Vorrichtung zum Pelletieren von Teilchen beschrieben. Dabei kann eine Düse für das Einbringen mehrerer Medien in ein Fliessbett eingesetzt werden. In die Düse können neben flüssigen Komponenten auch gasförmige Komponenten eingebracht werden, welche konzentrisch um einen Flüssigkeitsstrom austreten und das Zerstäuben der Flüssigkeit fördern.

In den bisher bekannten Verfahren zur Herstellung von Schalenkatalysatoren wurden in der Regel nur aus einer Metallkomponente bestehende Vorläuferlösungen eingesetzt. Bei der Notwendigkeit von mehreren Metallkomponenten wurde im allgemeinen eine konsekutive Arbeitsweise verfolgt; d.h., nach dem Imprägnieren mit der ersten Komponente erfolgte das Imprägnieren mit der zweiten Komponente. Der Einsatz von multi-Metallprecursor-Lösungen war in der Regel aus Gründen der mangelnden Stabilität solcher Lösungen nicht möglich. Weitere Mängel von bisher bekannten Systemen zum Versprühen von flüssigen Zusammensetzungen sind das Fehlen einer Vorheizung des Treibgases und das Fehlen einer Vorheizung der zu versprühenden Zusammensetzung. Gleichermaßen wenig Beachtung wurde der Sprühstrahl-Aufweitung bei der Benutzung einer Ultraschall-Expansionsdüse geschenkt, obgleich der Einsatz derartiger Düsen in der EP 0 599 193 A1 beschrieben wurde.

Ausgehend von diesem Stand der Technik war es Aufgabe der vorliegenden Erfindung, ein verbessertes Verfahren und eine verbesserte Vorrichtung für die Herstellung von Schalenkatalysatoren bereit zu stellen, mit denen die Imprägnierung von Trägermaterialien gezielter vorgenommen werden kann, die einfach zu realisieren sind und mit denen der Verbrauch an katalytisch aktivem Material deutlich reduziert warden kann.

Mit der vorliegenden Erfindung sollen außerdem Sprühverfahren zur Herstellung von Schalenkatalysatoren so verbessert werden, dass damit ein reproduzierbares Aufbringen von flüssigen Zusammensetzungen enthaltend katalytisch aktives Material und/oder von Vorläufern davon ermöglicht wird, insbesondere beim Ein-

satz von metastabilen oder nur wenig stabilen flüssigen Zusammensetzungen, beispielsweise bei kolloidalen multi-Metallvorläufer-Lösungen. Darüber hinaus soll auf den Katalysatorträgern eine feine und möglichst homogene Verteilung von katalytisch aktivem Material erreicht werden.

Die vorliegende Erfindung betrifft ein Verfahren zur Herstellung von Schalenkatalysatoren umfassend die Maßnahmen:

a) Bereitstellung einer Zusammensetzung enthaltend eine Flüssigkeit und ein katalytisch aktives Material und/oder einen Vorläufer davon in einem Vorratsbehälter,

b) Bereitstellung eines Trägermaterials in einem um eine Längsachse drehbaren Behälter,

c) Transport der Zusammensetzung aus dem Vorratsbehälter durch eine erste Leitung zu einer Sprühdüse,

d) Transport eines Treibfluids durch eine zweite Leitung zur Sprühdüse,

e) Zerstäuben von Zusammensetzung und Treibfluid in der Düse unter Erzeugung eines Aerosols, welches in den Behälter einströmt und das darin befindliche Trägermaterial imprägniert,

f) Erhitzen des Behälters (1), so dass die im Aerosol enthaltene Flüssigkeit aus dem Trägermaterial verdampft und das mit katalytisch aktivem Material und/oder einem Vorläufer davon beaufschlagte feinteilige Trägermaterial getrocknet wird, und

g) Ableiten oder Absaugen der verdampften Flüssigkeit aus dem Behälter.

Im erfindungsgemäßen Verfahren können beliebige zur Herstellung von Schalenkatalysatoren geeignete Trägermaterialien eingesetzt werden. Diese Trägermaterialien können beliebige Formen aufweisen, beispielsweise als Zylinder, Kegel, Kugel, Rotationsellipsoid, Granulat oder Teilchen vorliegen. Die Trägermaterialien können kompakte Körper darstellen oder vorzugsweise eine poröse Struktur aufweisen.

Diese Trägermaterialien können aus beliebigen Stoffen bestehen, solange diese unter den Bedingungen der vorgesehenen Reaktion inert und beständig sind. Beispiele für typische Trägermaterialien sind Metalloxide, wie $Al_2O_2$, $SiO_2$, $TiO_2$, ZnO, MgO, $SnO_2$, $CeO_2$, $Fe_2O_3$ oder Kohlenstoff, wie Aktivkohle oder Ruß. Es können auch Träger auf der Basis einer Spinellstruktur, wie zum Beispiel $MgAl_2O_4$, $CaAl_2O_4$, $ZnAl_2O_4$ oder $SnAl_2O_4$ eingesetzt werden oder es können Träger auf der Basis von Zeolithen eingesetzt werden.

Bei dem Trägermaterial in dem um eine Längsachse drehbaren Behälter kann es sich um ein anorganisches Trägermaterial handeln, insbesondere um Metalloxide oder um Kohlenstoff, wie Aktivkohle oder Russ.

Im erfindungsgemäßen Verfahren können beliebige zur Herstellung von Schalenkatalysatoren geeignete katalytisch aktive Materialien und/oder deren Vorläufer eingesetzt werden.

Als katalytisch aktive Materialien können beliebige Stoffe eingesetzt werden, solange diese unter den Bedingungen der vorgesehenen Reaktion inert sind und den Ablauf dieser Reaktion katalytisch unterstützen. Beispiele für katalytisch aktive Materialien sind Metalle, beispielsweise Übergangsmetalle und insbesondere Edelmetalle oder davon abgeleitete Verbindungen, wie Oxide, Halogenide oder Komplexverbindungen. Als katalytisch aktive Materialien werden typischerweise Edelmetalle oder davon abgeleitete Verbindungen, wie Platinmetalle, Gold, Silber oder Rhenium, sowie Zn, Cu, Ni, Co und/oder Fe verwendet. Unter Platinmetallen sind die Metalle Ruthenium, Rhodium, Palladium, Osmium, Iridium und Platin zu verstehen.

Als Vorläufer von katalytisch aktiven Materialien werden solche Verbindungen bezeichnet, die nach einer chemischen Umsetzung, beispielsweise einer Oxidationsreaktion, in ein katalytisch aktives Material überführt werden können. Beispiele für Vorläufer von katalytisch aktiven Materialien sind metallorganische Komplexe oder Metallverbindungen, deren Metall, abgeschieden auf der Trägeroberfläche, die katalytisch aktive Komponente des Katalysators ergibt.

Beispiele für erfindungsgemäß hergestellte Schalenkatalysatoren sind Katalysatoren mit unterschiedlichen Platin- und Zinngehalten auf einem bereitgestellten Trägermaterial.

Eine herkömmliche Herstellungsweise derartiger Katalysatoren im Labor beinhaltet das manuelle Aufträufeln von Hexachloroplatinatlösungen und Zinnchloridlösungen mit einer Bürette auf eine abgewogene Trägermaterialmenge. Es hat sich gezeigt, dass Imprägnierungen von zinnchloridhaltigen Platinkomplexsalzlösungen aufgrund von Zersetzungen der Imprägnierungslösung sehr problematisch verlaufen können.

Mit der erfindungsgemäßen Imprägnierungsmethode können erhebliche Verbesserungen bei der Katalysatorherstellung erzielt werden. Die erfindungsgemäße Sprühapparatur erlaubt ein gleichmäßiges Auftragen der Imprägnierlösung und aufgrund der Vorheizung des Trägerfluids kann ein rasches Verdampfen des Lösungsmittels erfolgen. Empfindliche Katalysatorsysteme können demzufolge sehr rasch getrocknet werden. Außerdem kann ohne chemische Vorbehandlung ein definierter Schalenkatalysator hergestellt werden. Die gezielt modifizierbare Imprägnierungsmethodik eröffnet sehr interessante Möglichkeiten für die Katalysatorentwicklung.

Die katalytisch aktive Substanz liegt auf dem erfindungsgemäß hergestellten Schalenkatalysator vorzugsweise in homogener Verteilung vor. Dabei handelt es sich insbesondere um nano-partikuläre Cluster von Metallen oder Metalloxiden. Diese homogene Verteilung auf dem Trägermaterial wird durch die erfindungsgemäße und nachstehend beschriebene Sprühapparatur ermöglich und basiert im Wesentlichen auf dem Versprühen einer stabilen, die katalytisch aktive Substanz und/oder deren Vorläufer enthaltenden Flüssigkeit. Diese Flüssigkeit kann in unterschiedlichen Ausgestaltungen vorliegen. So kann es sich beispielsweise um eine Lösung oder eine Dispersion einer katalytisch aktiven Verbindung und/oder deren Vorläufer in einer Flüssigkeit handeln.

Bevorzugt wird ein Verfahren, bei dem die Zusammensetzung enthaltend eine Flüssigkeit und ein katalytisch aktives Material und/oder einen Vorläufer davon im Vorratsbehälter eine Lösung oder Dispersion eines katalytisch aktiven Materials und/oder eines Vorläufers davon in der Flüssigkeit ist. Die Lösung oder die Dispersion können im Vorratsbehälter gerührt werden. Insbesondere wenn eine Dispersion aus dem Vorratsbehälter gefördert warden soll kann es von Vorteil sein, wenn diese im Vorratsbehälter gerührt wird.

Als Kolloide werden im Rahmen dieser Beschreibung Teilchen oder Tröpfchen bezeichnet, die in einer Flüssigkeit, dem Dispersionsmedium, fein verteilt vorliegen. Die einzelnen Kolloidteilchen oder -tröpfchen sind typischerweise zwischen 1 nm und 10 $\mu$m groß.

Unter Dispersionen werden im Rahmen dieser Beschreibung heterogene Zusammensetzungen von festen katalytisch aktiven Materialien und/oder deren Vorläufern in Flüssigkeiten verstanden, wobei der Durchmesser der Materialien und/oder der Vorläufer typischerweise im Bereich von 1 nm bis 100 $\mu$m liegt.

Besonders bevorzugt werden Lösungen eingesetzt, insbesondere solche von ein oder mehreren Übergangsmetallen und/oder deren Vorläufern. Einer der Vorteile des erfindungsgemäßen Verfahrens ist in einer schnellen Verdampfung der mobilen flüssigen Phase und einer damit verbundenen kontrollierten Agglomerierung des katalytisch aktiven Materials und/oder dessen Vorläufers zu Clustern auf der Oberfläche und/oder in den oberflächennahen Schichten des Trägermaterials zu sehen. Das führt im Ergebnis zu einer Behinderung des Eindringens der aufgebrachten Flüssigkeit in die tieferen Bereiche des Inneren des Trägermaterials.

Das Ausmaß des Eindringens der Flüssigkeit in das Trägermaterial kann durch Einstellen der Sprühbedingungen beeinflusst werden. So kann beispielsweise die Flüssigkeit und/oder das Treibfluid erwärmt werden, um ein beschleunigtes Verdampfen der Flüssigkeit nach dem Versprühen zu bewirken. Auf die Oberfläche des Trägermaterials trifft dann ein aufkonzentriertes Fluid, welches das katalytisch aktive Material und/oder dessen Vorläufer enthält. Das Eindringen des aufkonzentrierten Fluids in das Trägermaterial ist nur erschwert möglich.

Als Treibfluid können im erfindungsgemäßen Verfahren alle für den Einsatz in Sprühdüsen geeigneten Fluide eingesetzt werden. Dabei kann es sich grundsätzlich um Flüssigkeiten, Gase oder Fluide im überkritischen Zustand handeln. Bevorzugt werden Treibgase eingesetzt, insbesondere Inertgase, d.h. Gase aus solchen Komponenten, die unter den Bedingungen des Versprühens keine chemischen Reaktionen mit den anderen Komponenten des zu versprühenden Gemisches eingehen. Es ist jedoch auch möglich, reaktive Fluide einzusetzen. Beispiele für Treibfluide sind Luft, Stickstoff, Argon und bei Sprühbedingungen gasförmige Kohlenwasserstoffe.

Bevorzugt wird ein Verfahren bei dem als Sprühgas ein Inertgas eingesetzt wird, beispielsweise Stickstoff oder Argon, und das vor dem Transport durch die zweite Leitung und/oder während des Transports durch die zweite Leitung erwärmt wird, beispielsweise auf Temperaturen zwischen 30 und 90°C.

Ebenfalls bevorzugt wird ein Verfahren bei dem die Zusammensetzung im Vorratsbehälter erwärmt wird, beispielsweise auf Temperaturen zwischen 30 und 90°C.

Das Austragen der Zusammensetzung aus dem Vorratsbehälter in die erste Leitung kann auf beliebige Art und Weise erfolgen. Bevorzugt wird ein Verfahren bei dem die Zusammensetzung durch das Einbringen eines Treibgases in den Vorratsbehälter aus diesem in die erste Leitung gedrückt wird. Alternativ kann der Transport der Zusammensetzung aus dem Vorratsbehälter in die erste Leitung auch durch ein anderes herkömmliches Förderelement erfolgen, beispielsweise durch eine Dosierpumpe.

Die beiden Leitungen zur Sprühdüse können getrennt nebeneinander verlaufen oder sie bilden eine Funktionseinheit.

Bevorzugt wird ein Verfahren bei dem die erste Leitung innerhalb der zweiten Leitung verläuft und sich zwischen der Außenwand der ersten Leitung und der Innenwand der zweiten Leitung ein konzentrischer Hohlraum ausbildet, durch den das Treibgas der Düse zugeführt wird.

Im erfindungsgemäßen Verfahren können beliebige Sprühdüsen verwendet werden.

Einer der Vorteile des erfindungsgemäßen Verfahrens ist darin zu sehen, dass sich die Oberfläche des auf das Trägermaterial aufzubringenden zerstäubten Aerosols gezielt und steuerbar vergrößern lässt. Das ermöglicht einen gezielten Energieeintrag in das Aerosol (Druckverlust). Durch eine Vergrößerung der Oberfläche der Aerosolteilchen lässt sich die Verdampfungsgeschwindigkeit der in diesen Teilchen enthaltenen Flüssigkeit beeinflussen. Eine Vergrößerung der Verdampfungsgeschwindigkeit wäre auch durch andere Maßnahmen möglich, beispielsweise durch eine Erhöhung der Temperatur der Aerosolteilchen. Hohe Temperaturen sind aber oft für thermisch empfindliche Imprägnierlösungen ungünstig, die Verdampfung verläuft meist ungleichmässig. Feine Tropfen (Aerosole) sind energetisch ungünstig und adsobieren leichter auf dem Trägermaterial und verdampfen von dort auch leichter.

Bevorzugt werden Überschalldüsen verwendet. Darunter sind Düsen zu verstehen, die das durch die Düse strömende Medium bei dessen Austritt aus der Düse auf Überschallgeschwindigkeit beschleunigen. Grundsätzlich sind sämtliche Überschalldüsen zur Durchführung des erfindungsgemäßen Verfahrens bevorzugt. Besonders bevorzugt setzt man Lavaldüsen oder Venturidüsen ein, die das durch die Düse strömende Medium bei dessen Austritt aus der Düse auf Überschallgeschwindigkeit beschleunigen. Diese Düsen werden Überschall-Venturidüsen oder Überschall-Lavaldüsen genannt.

Grundsätzlich sind auch Düsen einsetzbar, die bei Schallgeschwindigkeit oder bei Unterschallgeschwindigkeit betrieben werden.

Besonders bevorzugt werden Ultraschall-Expansiondüsen in der Ausführung eines einschaligen Hyperboloides verwendet, das durch die Euklidische Normalform gegeben ist

$$(x/a)^2 + (y/b)^2 - (z/c)^2 = 1$$

worin a, b und c reelle Zahlen größer als null sind, a=b bedeutet und a/c größer als eins ist, und x, y und z die Koordinaten der Düsenoberfläche im Raum darstellen.

Durch eine solche Ausführung wird ein besonders gleichmäßiges großflächiges Auftragen der Lösung oder der Dispersion auf das Trägermaterial ermöglicht.

Der im erfindungsgemäßen Verfahren eingesetzte drehbare Behälter kann beliebige Formen aufweisen und kann aus beliebigen Materialien bestehen, solange diese mit den Komponenten für die Herstellung des Schalenkatalysators verträglich sind. Vorzugsweise besteht der Behälter aus Metall, Glas oder Keramik. Vorzugsweise ist der Behälter rotationssymmetrisch. Die Drehachse des Behälters verläuft in dessen Längsrichtung durch die Öffnung, in welche die Sprühdüse mündet. Besonders bevorzugt verläuft die Drehachse des Behälters in der Position der Rotationsachse des Rotationskörpers.

In einer bevorzugten Ausführungsform des erfindungsgemäßen Verfahrens verläuft die Drehachse des drehbaren Behälters in Längsrichtung dieses Behälters und ist um einen Winkel von 50° bis 90°, insbesondere von 70° bis 80°, zur Horizontalen geneigt.

Der drehbare Behälter kann einen leeren Innenraum mit glatten Wänden aufweisen. Bevorzugt befinden sich im Innern des drehbaren Behälters funktionelle Einbauten, die der Durchmischung des feinteiligen Trägermaterials dienen, insbesondere in das Innere des Behälters ragende Lamellen. Diese sogenannten "Schikanen" erleichtern die Durchmischung des sich im Innern des Behälters befindlichen Materials.

Nach dem Imprägnieren des Trägermaterials und dem Entfernen der Flüssigkeit wird das imprägnierte und getrocknete Trägermaterial aus dem drehbaren Behälter entladen.

Das aus dem Behälter entfernte imprägnierte und getrocknete Material wird einer Kalzinierung unterworfen. Dabei werden gegebenenfalls vorliegende Vorläufersubstanzen in katalytisch aktive Materialien überführt und katalytisch aktive Materialien werden auf bzw. im Träger konditioniert. Typische Temperaturen für den Kalzinierschritt hängen vom Katalysatorsystem ab. Kalziniertemperaturen betragen beispielhaft 500 bis 900°C.

Nach dem Trocknen und Kalzinieren des Katalysators kann sich gegebenenfalls noch eine Wäsche anschließen, um während des Kalzinierens angefallene und nicht erwünschte Bestandteile, beispielsweise Halogenide, zu entfernen. Daran können sich eine sekundäre Trocknung und eine sekundäre Kalzinierung anschließen.

Eine besonders bevorzugte Variante des erfindungsgemäßen Verfahrens umfasst folgende Maßnahmen:

i) Bereitstellung einer Lösung oder Dispersion eines katalytisch aktiven Materials und/oder eines Vorläufers davon in einer Flüssigkeit, welche in einem Vorratsgefäß (3) vorgelegt wird,
ii) Bereitstellung eines feinteiligen Trägermaterials in einem um eine Längsachse drehbaren Behälter (1),
iii) Beaufschlagung des Vorratsgefäßes (3) mit Inertgas (31), so dass die darin enthaltene Lösung oder Dispersion in eine innere Kapillare (51) geleitet wird und an deren Ende (52) in eine Überschall-Expansionsdüse (54) eintritt,
iv) Einleiten von Treibfluid (41) in eine äußere Kapillare (53), in welcher die innere Kapillare (51) verläuft, so dass ein konzentrischer Hohlraum durch beide Kapillaren (51, 53) definiert wird, in welchem sich das Treibfluid (41) bewegt und an dessen Austrittsende das Treibfluid (41) in die Überschall-Expansionsdüse (54) eintritt,
v) Zerstäuben des Treibfluids (41) und der Lösung oder Dispersion in der Überschall-Expansionsdüse (54), so dass ein Aerosol erzeugt wird, das in den Behälter (1) einströmt, wobei eine Strahlaufweitung des Aerosols erfolgt,
vi) Kontaktieren des Aerosols mit dem feinteiligen Trägermaterial im Behälter (1), so dass das Aerosol das feinteilige Trägermaterial imprägniert und sich das Aerosol auf der Oberfläche und/oder in oberflächennahen Schichten, des feinteiligen Trägermaterials niederschlägt,
vii) Erhitzen des Behälters (1), so dass die im Aerosol enthaltene Flüssigkeit aus dem feinteiligen Trägermaterial verdampft und
viii) Ableiten oder Absaugen der verdampften Flüssigkeit aus dem Behälter (1).

Beim Imprägnieren des feinteiligen Trägermaterials mit dem Aerosol in oberflächennahen Schichten können beispielsweise Eindringtiefen von bis zu 1 mm realisiert werden, beispielsweise Eindringtiefen von 0,5 mm bis 1 mm.

In einer bevorzugten Variante der erfindungsgemäßen Vorrichtung ist das Vorratsgefäß (3) mit einer Rührvorrichtung ausgestattet.

In einer weiteren besonders bevorzugten Variante des erfindungsgemäßen Verfahrens wird das Treibfluid und/oder die Zusammensetzung im Vorratsbehälter auf eine solche Temperatur erwärmt, dass ein Teil der im Aerosol enthaltenen Flüssigkeit im Behälter bereits vor dem Auftreffen des Aerosols auf das Trägermaterial verdampft, so dass sich die Eindringtiefe des Aerosols in das Trägermaterial gezielt einstellen lässt.

In einer weiteren bevorzugten Variante des erfindungsgemäßen Verfahrens dreht sich der drehbare Behälter kontinuierlich um eine durch in Längsrichtung der Sprühdüse verlaufende Achse, insbesondere durch eine in Längsrichtung der Sprühdüse verlaufende Rotationsachse, bevorzugt mit einer Rotationsgeschwindigkeit $v = 3 - 300$ min$^{-1}$, besonders bevorzugt mit einer Rotationsgeschwindigkeit $v = 10 - 30$ min$^{-1}$.

Eine weitere besonders bevorzugte Variante des erfindungsgemäßen Verfahrens beinhaltet das Einstellen der Sprühgeschwindigkeit $d/dt\, m_s = \dot{m}_s$ für die Zusammensetzung enthaltend die Flüssigkeit und das katalytisch aktive Material und/oder einen Vorläufer davon in einer solchen Weise, dass sich ein funktionaler Zusammenhang zwischen Sprühgeschwindigkeit $\dot{m}_s$ und Verdampfungsgeschwindigkeit $d/dt\, m_v = \dot{m}_v$ der Flüssigkeit einstellt, wobei $\dot{m}_s = a \cdot \dot{m}_v$ ist und $0,5 < a < 3,5$, bevorzugt $0,13 < a < 2,0$, besonders bevorzugt $0,9 < a < 1,0$ bedeutet.

Das erfindungsgemäße Verfahren erlaubt

- die Imprägnierung von Katalysatorträgern unterschiedlicher Form und unterschiedlichen Materials,
- den Einsatz einer flüssigen Imprägnierzusammensetzung, die gegebenenfalls vorgeheizt ist, die eine oder mehrere katalytisch aktive Materialien auch in der Form eines Vorläufers davon und gegebenenfalls weitere Zusatzstoffe enthält, beispielsweise Säuren, Basen oder Puffersubstanzen als pH Regulierungsmittel (Puffer), oder Immobilisatoren für bereits auf dem Träger abgeschiedene Aktivkomponenten,
- das separierte Aufbringen von flüssigen Imprägnierzusammensetzungen unterschiedlicher Zusammensetzung durch getrenntes Versprühen,
- die Verwendung eines um die Hochachse verkippten drehbaren Behälters (z.B. eines Glaskolbens) mit Schikanewänden, der eine kontinuierlich Drehbewegung um seine Längsachse ausführt, und
- die Verwendung einer Sprühdüse, die zum einen durch eine flüssige Imprägnierzusammensetzung versorgt wird, welche durch leichten Überdruck durch ein Kapillarsystem an den Sprühkopf befördert wird und dort in konstantem Massestrom austritt, und die zusammen mit einem gegebenenfalls vorbeheizten Trägerfluid und durch die formgebungsbedingte Überschall-Expansionsdüse am Ende der Kapillare in einen Sprühnebel mit großer Strahlaufweitung zerstäubt wird.

Die Erfindung betrifft auch eine Vorrichtung zum Beaufschlagen von Trägermaterial mit einem katalytisch aktiven Material und/oder einem Vorläufer davon. Die Vorrichtung ist durch die Anwesenheit folgender Elemente gekennzeichnet:

A) Vorratsbehälter für eine Zusammensetzung enthaltend eine Flüssigkeit und ein katalytisch aktives Material und/oder einen Vorläufer davon,
B) um eine Längsachse drehbarer Behälter für ein Trägermaterial,
C) Sprühdüse, die in den drehbaren Behälter mündet,
D) erste Leitung, welche zwischen Vorratsbehälter und Sprühdüse angeordnet ist und dem Transport der Zusammensetzung aus dem Vorratsbehälter zur Sprühdüse dient, und
E) zweite Leitung, welche dem Transport eines Treibfluids zur Sprühdüse dient.

In einer bevorzugten Variante der erfindungsgemäßen Vorrichtung sind der Vorratsbehälter und der drehbare Behälter mit Heizungen ausgestattet.

In einer weiteren bevorzugten Variante der erfindungsgemäßen Vorrichtung ist ein mit einer Heizung ausgestatteter Vorratsbehälter für ein Treibfluid vorgesehen, welcher mit der zweiten Leitung verbunden ist und/oder die zweite Leitung ist mit einer Heizung ausgestattet.

Eine weitere bevorzugte Variante der erfindungsgemäßen Vorrichtung ist dadurch gekennzeichnet, dass die erste Leitung innerhalb der zweiten Leitung verläuft, so dass sich zwischen der Außenwand der ersten Leitung und der Innenwand der zweiten Leitung ein konzentrischer Hohlraum ausbildet. Dabei weist der konzentrische Hohlraum vorzugsweise einen Spaltdurchmesser auf, der bei gegebenem Gas-Vordruck die Strömungsgeschwindigkeit des im Hohlraum strömenden Treibfluids um ein Vielfaches erhöht, und das in Richtung auf den drehbaren Behälter weisene Ende der zweiten Leitung verfügt über eine logarithmische Öffnung, so dass sich eine Überschall-Expansionsdüse ausbildet.

In einer besonders bevorzugten Ausführungsform der erfindungsgemäßen Vorrichtung verläuft eine erste Leitung innerhalb einer zweiten Leitung, so dass sich zwischen der Außenwand der ersten Leitung und der Innenwand der zweiten Leitung ein konzentrischer Hohlraum ausbildet, das in Richtung des Behälters mündende Ende der ersten Leitung ist in Richtung der Längsachse gesehen beweglich und die Außenwand der zweiten Leitung ist am in Richtung des Behälters mündenden Ende aufgeweitet, so dass sich eine Düse ausbildet und der aus dem Ende der ersten Leitung austretende Flüssigkeitsstrom aufgeweitet und versprüht wird.

Weitere bevorzugte erfindungsgemäße Vorrichtungen sind dadurch gekennzeichnet, dass die Düse eine Überschall-Expansionsdüse ist, vorzugsweise eine Lavaldüse oder eine Venturidüse.

Noch weitere bevorzugte erfindungsgemäße Vorrichtungen sind dadurch gekennzeichnet, dass der drehbare Behälter eine in Längsrichtung des Behälters verlaufende Drehachse aufweist, die um einen Winkel von 50° bis 90°, vorzugsweise 70° bis 80° zur Horizontalen geneigt ist, wobei sich im Innern des drehbaren Behälters vorzugsweise funktionelle Einbauten befinden, die der Durchmischung des feinteiligen Trägermaterials dienen, insbesondere in das Innere des Behälters ragende Lamellen.

Die Erfindung wird anhand der Figuren 1 bis 3 beispielhaft beschrieben.

In Figur 1 ist eine Variante der erfindungsgemäßen Sprühapparatur beispielhaft dargestellt.

Figur 2 beschreibt eine Vorderansicht des Sprühkopfes.

Figur 3 beschreibt eine Seitenansicht des Sprühkopfes im Schnitt.

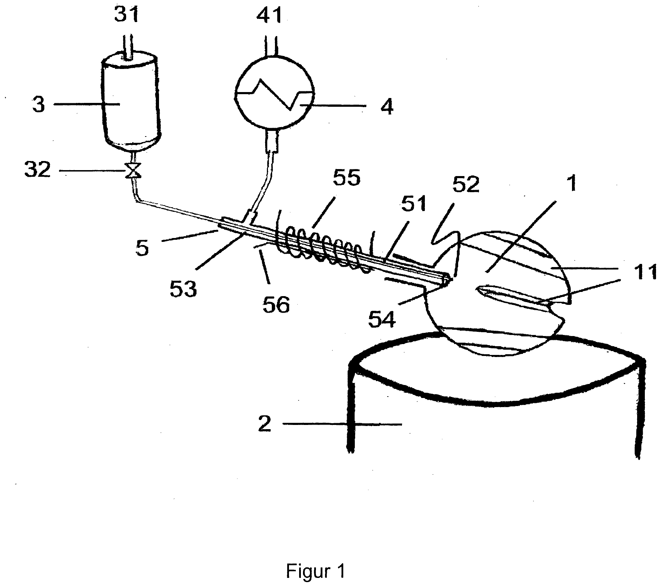

In Figur 1 wird ein beheiztes Vorratsgefäß (3) für die Lösung oder Dispersion des Vorläufers der katalytisch wirksamen Substanz gezeigt, welche einem Sprühkopf (5) zugeführt wird. Diese Lösung bzw. Dispersion wird mit Hilfe eines Inertgases (31) durch eine erste Leitung bzw. durch eine innere Kapillare (51) gepresst und tritt an der Austrittsöffnung (52), die in eine Sprühdüse, z.B. eine Überschallexpansionsdüse (54) mündet, in einen Glaskolben (1) aus. Der Transport der Lösung bzw. Dispersion durch die innere Kapillare (51) wird durch ein Inertgas (41) unterstützt, das in einer Gasvorwärmungseinrichtung (4) vorgeheizt worden ist und in eine konzentrische zweite Leitung bzw. eine äußere Kapillare (53) eingeleitet wurde. Innere und äußere Kapillare (51, 53) sind durch eine Heizwendel (55) beheizbar. Die Temperatur kann durch ein Thermoelement (56) ermittelt werden. Inertgas (41) verlässt die konzentrische äußere Kapillare (53) und strömt zusammen mit der Lösung bzw. Dispersion durch die Sprühdüse (54). Der an der Sprühdüse (54) austretende Strom zerstäubt und wird infolge der logarithmischen Formgebung der Sprühdüse (54) zu einer großen Strahlaufweitung und einer damit verbundenen homogeneren Verteilung gezwungen. Strahlaufweitung und Sprühgeschwindigkeit sind durch Einstellung des Druckes des Inertgases (41), sowie der relativ zueinander lateralen Verschiebung Δd der Austrittsöffnung (52) und der Überschall-Expansionsdüse (54) variabel einstellbar.

Der Glaskolben (1) wird durch einen drehzahlgeregelten Motor angetrieben, beispielsweise mit Drehzahlen zwischen 15 und 300 min⁻¹. Bei den im Folgenden aufgeführten Beispielen für Sprühimprägnierungen wurde mit einer Drehzahl von 20 min⁻¹ gearbeitet. Zur besseren Durchmischung wurde der Glaskolben (1) an den Wänden und am Boden mit Schikanen (11) ausgestattet. Außerdem wurde der Glaskolben (1) um 75° um die Hochachse verkippt. Zur schnellen Verdunstung des Lösungsmittels der Imprägnierlösung, welches durch die Siedetemperatur $T_s$ gekennzeichnet ist, wurde der Kolben in einem Wasser- oder Ölbad (2) auf einer Temperatur T ~ 0,9 $T_s$ gehalten.

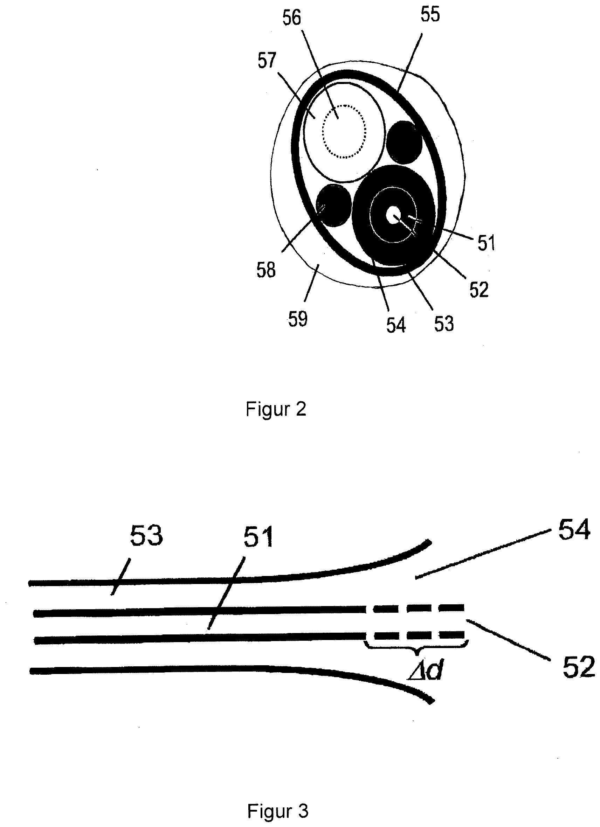

Figur 2 zeigt eine Vorderansicht des Sprühkopfes (5) in Aufsicht. Dargestellt sind die innere Kapillare (51) mit Austrittsöffnung (52) sowie die äußere Kapillare (53), welche die Überschall-Expansionsdüse (54) ausbildet. Diese Elemente sind von der Heizung (55) umhüllt. Heizung (55) umfasst zusätzlich ein Führungsrohr (57) für ein Thermoelement (56). Außerdem ist ein Heizstab (58) vorhanden; dieser ist optional vorgesehen für den Fall, dass die Heizung (55) nicht bis zur Düse (54) fortgeführt wird. Der Sprühkopf (5) ist außerdem mit einer Isolation (59) ummantelt.

Figur 3 zeigt eine Seitenansicht des Sprühkopfes (5) im Schnitt. Gezeigt wird die innere Kapillare (51) mit Austrittsöffnung (52), die konzentrische äußere Kapillare (53) und die Überschall-Expansionsdüse (54), welche durch eine Aufweitung der äußeren Kapillare (53) in der Nähe der Austrittsöffnung (52) ausgebildet wird. Die Öffnung der äußeren Kapillare (53) folgt idealerweise der Logarithmusfunktion. Am rechten Ende der inneren Kapillare (51) ist durch Strichelung angedeutet, dass die Austrittsöffnung (52) um die Distanz Δd verschoben werden kann.

Die nachfolgenden Beispiele erläutern die Erfindung ohne diese zu begrenzen. Die in den Beispielen beschriebenen Sprühversuche wurden mit der in den Figuren 1-3 beschriebenen Apparatur durchgeführt.

Beispiel 1

Die Temperatur des zu imprägnierenden Trägermaterials im Kolben (1) betrug 82°C. Die wässrige, eingefärbte Imprägnierungslösung wurde in der inneren Kapillare (51) der Sprühdüse auf 95°C aufgewärmt. Der Vordruck des Argongasstromes von 2,0 bar bei 250°C in der konzentrischen Kapillare (53) versprühte die Lösung mit einem Volumenstrom von 1,1 ml/min. Es resultierte eine Eindringtiefe der Imprägnierungslösung von etwa 0,05 mm in das Trägermaterial. Die Lösungsmenge entsprach dem Aufnahmevermögen des Trägers. Nach Abschluss des Sprühvorgangs dauerte es etwa 1 min bis der zwischenzeitlich leicht haftende, imprägnierte Träger rieselfähig war.

Beispiel 2

Die Temperatur des zu imprägnierenden Trägermaterials im Kolben (1) betrug 84°C. Die edelmetallsalzhaltige Imprägnierungslösung wurde in der inneren Kapillare (51) der Sprühdüse auf 82°C aufgewärmt. Der Vordruck des Argongasstromes von 2,0 bar bei 250°C in der konzentrischen Kapillare (53) versprühte die Imprägnierungslösung mit einem Volumenstrom von 1,6 ml/min. Es resultierte eine Eindringtiefe der Imprägnierungslösung von etwa 0,1 mm in das Trägermaterial. Die Lösungsmenge entsprach dem Aufnahmevermögen des Trägers. Nach Abschluss des Sprühvorgangs dauerte es etwa 3,5 min bis der zwischenzeitlich leicht haftende, imprägnierte Träger rieselfähig war.

Beispiel 3

Die Temperatur des zu imprägnierenden Trägermaterials im Kolben (1) betrug 81°C. Die bimetallsalzhaltige Imprägnierungslösung mit einer im Vergleich zu Beispiel 2 höheren Viskosität wurde in der inneren Kapillare (51) der Sprühdüse auf 82°C aufgewärmt. Der Vordruck des Argongasstromes von 2,0 bar bei 250°C in der konzentrischen Kapillare (53) versprühte die Imprägnierungslösung mit einem Volumenstrom von 2,5 ml/min. Es resultierte eine Eindringtiefe der Imprägnierungslösung von etwa 0,6 mm in das Trägermaterial. Die Lösungsmenge entsprach dem Aufnahmevermögen des Trägers. Nach Abschluss des Sprühvorgangs dauerte es etwa 4,5 min bis der zwischenzeitlich leicht haftende, imprägnierte Träger rieselfähig war.

Der in diesen Beispielen eingesetzte Argongasstrom in der konzentrischen Kapillare (53) versprühte die aus der inneren Kapillare (51) mit einem definierten Volumenstrom austretende Flüssigkeit. Wichtig für die Ausbildung der Tröpfchengröße ist das Verhältnis des Gasstromes zum Flüssigkeitsvolumenstrom. Durch den Argonvordruck wird der austretende Gasmengenstrom bestimmt. Der Flüssigkeitsstrom kann mit einem Gasdruck auf den Vorratsbehälter (3) oder beispielsweise auch mit einer Dosierpumpe eingestellt werden. Die Abstandsdifferenz zwischen Austrittsöffnung (52) der inneren Kapillare (51) und Überschall-Expansionsdüse (54) bestimmt ebenso maßgeblich die Tröpfchengröße.

**Patentansprüche**

1. Verfahren zur Herstellung von Schalenkatalysatoren umfassend die Maßnahmen:

    a) Bereitstellung einer Zusammensetzung enthaltend eine Flüssigkeit und ein katalytisch aktiven Materials und/oder einen Vorläufer davon in einem Vorratsbehälter,
    b) Bereitstellung eines Trägermaterials in einem um eine Längsachse drehbaren Behälter,
    c) Transport der Zusammensetzung aus dem Vorratsbehälter durch eine erste Leitung zu einer Sprühdüse,
    d) Transport eines Treibfluids durch eine zweite Leitung zur Sprühdüse,
    e) Zerstäuben von Zusammensetzung und Treibfluid in der Düse unter Erzeugung eines Aerosols, welches in den Behälter einströmt und das darin befindliche Trägermaterial imprägniert,
    f) Erhitzen des Behälters (1), so dass die im Aerosol enthaltene Flüssigkeit aus dem Trägermaterial verdampft und das mit katalytisch aktivem Material und/oder einem Vorläufer davon beaufschlagte Trägermaterial getrocknet wird, und
    g) Ableiten oder Absaugen der verdampften Flüssigkeit aus dem Behälter.

2. Verfahren nach Anspruch 1, **dadurch gekennzeichnet, dass** das Sprühfluid ein Inertgas ist, das vor dem Transport durch die zweite Leitung und/oder während des Transports durch die zweite Leitung erwärmt wird.

3. Verfahren nach Anspruch 1, **dadurch gekennzeichnet, dass** die Zusammensetzung enthaltend eine Flüssigkeit und ein katalytisch aktives Material und/oder einen Vorläufer davon im Vorratsbehälter erwärmt wird.

4. Verfahren nach Anspruch 1, **dadurch gekennzeichnet, dass** die Zusammensetzung enthaltend eine Flüssigkeit und ein katalytisch aktives Material und/oder einen Vorläufer davon durch das Einbringen eines Treibfluids in den Vorratsbehälter oder durch eine Dosierpumpe aus diesem in die erste Leitung gedrückt wird.

5. Verfahren nach Anspruch 1, **dadurch gekennzeichnet, dass** die Zusammensetzung enthaltend eine Flüssigkeit und ein katalytisch aktives Material und/oder einen Vorläufer davon im Vorratsbehälter eine Lösung oder Dispersion eines katalytisch aktiven Materials und/oder eines Vorläufers davon in der Flüssigkeit ist, wobei die Lösung oder insbesondere die Dispersion im Vorratsbehälter gerührt werden kann.

6. Verfahren nach Anspruch 1, **dadurch gekennzeichnet, dass** die erste Leitung innerhalb der zweiten Leitung verläuft und sich zwischen der Außenwand der ersten Leitung und der Innenwand der zweiten Leitung ein konzentrischer Hohlraum ausbildet, durch den das Treibfluid der Düse zugeführt wird.

7. Verfahren nach Anspruch 1, **dadurch gekennzeichnet, dass** als Düse eine Überschall-Expansionsdüse verwendet wird, vorzugsweise eine Lavaldüse oder eine Venturidüse.

8. Verfahren nach Anspruch 1, **dadurch gekennzeichnet, dass** es sich bei dem Trägermaterial in dem drehbar gelagerten Behälter um ein anorganisches Trägermaterial handelt, insbesondere um Metalloxide oder Kohlenstoff.

9. Verfahren nach Anspruch 1, **dadurch gekennzeichnet, dass** die Drehachse des drehbaren Behälters in Längsrichtung dieses Behälters verläuft und um einen Winkel von 20° bis 75° von der Horizontalen geneigt ist.

10. Verfahren nach Anspruch 1, **dadurch gekennzeichnet, dass** sich im Innern des drehbaren Behälters funktionelle Einbauten befinden, die der Durchmischung des Trägermaterials dienen, insbesondere in das Innere des Behälters ragende Lamellen.

11. Verfahren nach Anspruch 1, **dadurch gekennzeichnet, dass** das imprägnierte Trägermaterial nach dem Verdampfen der Flüssigkeit aus dem Behälter entnommen wird und einer Kalzinierung unterworfen wird, insbesondere bei Temperaturen von 500 bis 900°C.

12. Verfahren nach Anspruch 1, **dadurch gekennzeichnet, dass** dieses folgende Maßnahmen umfasst:

i) Bereitstellung einer Lösung oder Dispersion eines katalytisch aktiven Materials und/oder eines Vorläufers davon in einer Flüssigkeit, welche in einem Vorratsgefäß (3) vorgelegt wird,
ii) Bereitstellung eines Trägermaterials in einem um eine Längsachse drehbaren Behälter (1),
iii) Beaufschlagung des Vorratsgefäßes (3) mit Inertgas (31), so dass die darin enthaltene Lösung oder Dispersion in eine innere Kapillare (51) geleitet wird und an deren Ende (52) in eine Überschall-Expansionsdüse (54) eintritt,
iv) Einleiten von Treibfluid (41) in eine äußere Kapillare (53), in welcher die innere Kapillare (51) verläuft, so dass ein konzentrischer Hohlraum durch beide Kapillaren (51, 53) definiert wird, in welchem sich das Treibfluid (41) bewegt und an dessen Austrittsende das Treibfluid (41) in die Überschall-Expansionsdüse (54) eintritt,
v) Zerstäuben des Treibfluids (41) und der Lösung oder Dispersion in der Überschall-Expansionsdüse (54), so dass ein Aerosol erzeugt wird, das in den Behälter (1) einströmt, wobei eine Strahlaufweitung des Aerosols erfolgt,
vi) Kontaktieren des Aerosols mit dem Trägermaterial im Behälter (1), so dass das Aerosol das Trägermaterial imprägniert und sich das Aerosol auf der Oberfläche und/oder in oberflächennahen Schichten des Trägermaterials niederschlägt,
vii) Erhitzen des Behälters (1), so dass die im Aerosol enthaltene Flüssigkeit aus dem Trägermaterial verdampft, und
viii) Ableiten oder Absaugen der verdampften Flüssigkeit aus dem Behälter (1).

13. Verfahren nach einem der Ansprüche 1 bis 12, **da-**

**durch gekennzeichnet, dass** das Treibfluid und/oder die Zusammensetzung im Vorratsbehälter auf eine solche Temperatur erwärmt wird, dass ein Teil der im Aerosol enthaltenen Flüssigkeit im Behälter bereits vor dem Auftreffen des Aerosols auf das Trägermaterial verdampft, so dass sich die Eindringtiefe des Aerosols in das Trägermaterial gezielt einstellen lässt.

14. Verfahren nach Anspruch 1, **dadurch gekennzeichnet, dass** der drehbare Behälter sich kontinuierlich um eine durch in Längsrichtung der Sprühdüse verlaufende Achse dreht, insbesondere durch eine in Längsrichtung der Sprühdüse verlaufende Rotationsachse, bevorzugt mit einer Rotationsgeschwindigkeit $v = 3 - 300$ min$^{-1}$, besonders bevorzugt mit einer Rotationsgeschwindigkeit $v = 10 - 30$ min$^{-1}$.

15. Verfahren nach Anspruch 1, **dadurch gekennzeichnet, dass** die Sprühgeschwindigkeit $d/dt\, m_s = \dot{m}_s$ für die Zusammensetzung enthaltend die Flüssigkeit und das katalytisch aktive Material und/oder din Vorläufer davon so eingestellt wird, dass sich ein funktionaler Zusammenhang zwischen Sprühgeschwindigkeit $\dot{m}_s$ und Verdampfungsgeschwindigkeit $d/dt\, m_v = \dot{m}_v$ der Flüssigkeit einstellt, wobei $\dot{m}_s = a \cdot \dot{m}_v$ ist und $0,5 < a < 3,5$, bevorzugt $0,13 < a < 2,0$, besonders bevorzugt $0,9 < a < 1,0$ bedeutet.

16. Vorrichtung zum Beaufschlagen von Trägermaterial mit einem katalytisch aktiven Material und/oder einem Vorläufer davon enthaltend die folgenden Elemente:

A) Vorratsbehälter (3) für eine Zusammensetzung enthaltend eine Flüssigkeit und ein katalytisch aktives Material und/oder einen Vorläufer davon,
B) um eine Längsachse drehbarer Behälter (1) für ein Trägermaterial,
C) Sprühdüse (54), die in den drehbaren Behälter (1) mündet,
D) erste Leitung (51), welche zwischen Vorratsbehälter (3) und Sprühdüse (54) angeordnet ist und dem Transport der Zusammensetzung aus dem Vorratsbehälter (3) zur Sprühdüse (54) dient, und
E) zweite (53) Leitung, welche dem Transport eines Treibfluids (41) zur Sprühdüse (54) dient.

17. Vorrichtung nach Anspruch 16, **dadurch gekennzeichnet, dass** der Vorratsbehälter (3) mit einer Rührvorrichtung ausgestattet ist.

18. Vorrichtung nach Anspruch 16, **dadurch gekennzeichnet, dass** der Vorratsbehälter (3) und der drehbare Behälter (1) mit Heizungen ausgestattet sind.

**19.** Vorrichtung nach Anspruch 16, **dadurch gekennzeichnet, dass** ein mit einer Heizung ausgestatteter Vorratsbehälter (4) für ein Treibfluid vorgesehen ist, welcher mit der zweiten Leitung (53) verbunden ist und/oder dass die zweite Leitung (53) mit einer Heizung ausgestattet ist.

**20.** Vorrichtung nach Anspruch 16, **dadurch gekennzeichnet, dass** die erste Leitung (51) innerhalb der zweiten Leitung (53) verläuft, so dass sich zwischen der Außenwand der ersten Leitung (51) und der Innenwand der zweiten Leitung (53) ein konzentrischer Hohlraum ausbildet.

**21.** Vorrichtung nach Anspruch 20, **dadurch gekennzeichnet, dass** der konzentrische Hohlraum einen Spaltdurchmesser aufweist, der bei gegebenem Gas-Vordruck die Strömungsgeschwindigkeit des im Hohlraum strömenden Treibfluids um ein Vielfaches erhöht, und dass das in Richtung auf den drehbaren Behälter weisende Ende der zweiten Leitung über eine logarithmische Öffnung verfügt, so dass sich eine Überschalldüse (54) ausbildet.

**22.** Vorrichtung nach Anspruch 16, **dadurch gekennzeichnet, dass** die Düse (54) eine Überschalldüse ist, vorzugsweise eine Lavaldüse oder eine Venturidüse.

**23.** Vorrichtung nach Anspruch 20, **dadurch gekennzeichnet, dass** das in Richtung des Behälters (1) mündende Ende der ersten Leitung (51) in Richtung der Längsachse gesehen beweglich ist und dass die Außenwand der zweiten Leitung (53) am in Richtung des Behälters (1) mündenden Ende aufgeweitet ist, so dass sich eine Düse (54) ausbildet in welcher der aus dem Ende der ersten Leitung (51) austretende Flüssigkeitsstrom aufgeweitet und versprüht wird.

**24.** Vorrichtung nach Anspruch 16, **dadurch gekennzeichnet, dass** der drehbare Behälter (1) eine in Längsrichtung des Behälters (1) verlaufende Drehachse aufweist, die um einen Winkel von 50° bis 90°, vorzugsweise 70° bis 80° zur Horizontalen geneigt ist.

**25.** Vorrichtung nach Anspruch 16, **dadurch gekennzeichnet, dass** sich im Innern des drehbaren Behälters (1) funktionelle Einbauten (11) befinden, die der Durchmischung des Trägermaterials dienen, insbesondere in das Innere des Behälters ragende Lamellen.

## Claims

**1.** Process for producing coated catalysts, which comprises the measures:

a) provision of a composition containing a liquid and a catalytically active material and/or a precursor thereof in a stock vessel,
b) provision of a support material in a vessel which is rotatable about a longitudinal axis,
c) transport of the composition from the stock vessel through a first conduit to a spray nozzle,
d) transport of a propellant fluid through a second conduit to the spray nozzle,
e) atomization of composition and propellant fluid in the nozzle to produce an aerosol which flows into the vessel and impregnates the support material present therein,
f) heating of the vessel (1) so that the liquid present in the aerosol evaporates from the support material and the support material which has been treated with catalytically active material and/or a precursor thereof is dried, and
g) discharge or extraction of the vaporized liquid from the vessel.

**2.** Process according to Claim 1, **characterized in that** the spraying fluid is an inert gas which is heated before transport through the second conduit and/or during transport through the second conduit.

**3.** Process according to Claim 1, **characterized in that** the composition containing a liquid and a catalytically active material and/or a precursor thereof is heated in the stock vessel.

**4.** Process according to Claim 1, **characterized in that** the composition containing a liquid and a catalytically active material and/or a precursor thereof is pushed from the stock vessel into the first conduit by introduction of a propellant fluid into the stock vessel or by means of a metering pump.

**5.** Process according to Claim 1, **characterized in that** the composition containing a liquid and a catalytically active material and/or a precursor thereof in the stock vessel is a solution or dispersion of a catalytically active material and/or a precursor thereof in the liquid, where the solution or in particular the dispersion can be stirred in the stock vessel.

**6.** Process according to Claim 1, **characterized in that** the first conduit runs within the second conduit and a concentric hollow space through which the propellant fluid is supplied to the nozzle is formed between the exterior wall of the first conduit and the interior wall of the second conduit.

**7.** Process according to Claim 1, **characterized in that** a supersonic expansion nozzle, preferably a Laval nozzle or a Venturi nozzle, is used as nozzle.

**8.** Process according to Claim 1, **characterized in that** the support material in the rotatably mounted vessel is an inorganic support material, in particular metal oxides or carbon.

9. Process according to Claim 1, **characterized in that** the axis of rotation of the rotatable vessel runs in the longitudinal direction of this vessel and is inclined from the horizontal by an angle of from 20° to 75°.

10. Process according to Claim 1, **characterized in that** functional internals which serve for mixing of the support material are present in the interior of the rotatable vessel, especially lamellae projecting into the interior of the vessel.

11. Process according to Claim 1, **characterized in that** the impregnated support material is taken from the vessel after evaporation of the liquid and is subjected to calcination, in particular at temperatures of from 500 to 900°C.

12. Process according to Claim 1, **characterized in that** it comprises the following measures:

   i) provision of a solution or dispersion of a catalytically active material and/or a precursor thereof in a liquid, which is initially placed in a stock vessel (3),
   ii) provision of a support material in a vessel (1) which is rotatable about a longitudinal axis,
   iii) introduction of inert gas (31) into the stock vessel (3) so that the solution or dispersion present therein is conveyed into an inner capillary (51) and at its end (52) enters a supersonic expansion nozzle (54),
   iv) introduction of propellant fluid (41) into an outer capillary (53) in which the inner capillary (51) runs so as to define a concentric hollow space through the two capillaries (51, 53) in which the propellant fluid (41) moves and at the outlet end of which the propellant fluid (41) enters the supersonic expansion nozzle (54),
   v) atomization of the propellant fluid (41) and the solution or dispersion in the supersonic expansion nozzle (54) so as to produce an aerosol which flows into the vessel (1), with widening of the jet of the aerosol occurring,
   vi) contacting of the aerosol with the support material in the vessel (1) so that the aerosol impregnates the support material and the aerosol deposits on the surface and/or in layers close to the surface of the support material,
   vii) heating of the vessel (1) so that the liquid present in the aerosol evaporates from the support material and
   viii) discharge or extraction of the vaporized liquid from the vessel (1).

13. Process according to any of Claims 1 to 12, **characterized in that** the propellant fluid and/or the composition in the stock vessel are heated to such a temperature that part of the liquid present in the aerosol evaporates in the vessel even before impingement of the aerosol onto the support material, so that the penetration depth of the aerosol into the support material can be set in a targeted manner.

14. Process according to Claim 1, **characterized in that** the rotatable vessel rotates continuously about an axis running in the longitudinal direction of the spray nozzle, in particular about a rotational axis running in the longitudinal direction of the spray nozzle, preferably at a rotational speed $v = 3\text{-}300\ min^{-1}$, particularly preferably at a rotational speed of $v = 10\text{-}30\ min^{-1}$.

15. Process according to Claim 1, **characterized in that** the spraying rate $d/dt\ m_s = \dot{m}_s$ for the composition containing the liquid and the catalytically active material and/or a precursor thereof is set so that a functional relationship is established between spraying rate $\dot{m}_s$ and evaporation rate $d/dt\ m_v = \dot{m}_v$ of the liquid, where $\dot{m}_s = a \cdot \dot{m}_v$ and $0.5 < a < 3.5$, preferably $0.13 < a < 2.0$, particularly preferably $0.9 < a < 1.0$.

16. Apparatus for applying a catalytically active material and/or a precursor thereof to support material, which contains the following elements:

   A) stock vessel (3) for a composition containing a liquid and a catalytically active material and/or a precursor thereof,
   B) vessel (1) which is rotatable about a longitudinal axis for a support material,
   C) spray nozzle (54) which opens into the rotatable vessel (1),
   D) first conduit (51) which is arranged between stock vessel (3) and spray nozzle (54) and serves for transport of the composition from the stock vessel (3) to the spray nozzle (54), and
   E) second (53) conduit which serves for transport of a propellant fluid (41) to the spray nozzle (54).

17. Apparatus according to Claim 16, **characterized in that** the stock vessel (3) is equipped with a stirring device.

18. Apparatus according to Claim 16, **characterized in that** the stock vessel (3) and the rotatable vessel (1) are equipped with heating devices.

19. Apparatus according to Claim 16, **characterized in that** a stock vessel (4) equipped with a heating device is provided for a propellant fluid and is connected to the second conduit (53) and/or **in that** the second conduit (53) is equipped with a heating device.

20. Apparatus according to Claim 16, **characterized in that** the first conduit (51) runs within the second conduit (53) so that a concentric hollow space is formed between the exterior wall of the first conduit (51) and the interior wall of the second conduit (53).

21. Apparatus according to Claim 20, **characterized in that** the concentric hollow space has a gap diameter which at a given gas admission pressure increases the flow velocity of the propellant fluid flowing in the hollow space by a multiple and **in that** the end of the second conduit which points in the direction of the rotatable vessel has a logarithmic opening so that a supersonic nozzle (54) is formed.

22. Apparatus according to Claim 16, **characterized in that** the nozzle (54) is a supersonic nozzle, preferably a Laval nozzle or a Venturi nozzle.

23. Apparatus according to Claim 20, **characterized in that** the end of the first conduit (51) which opens in the direction of the vessel (1) is movable in the direction of the longitudinal axis and **in that** the exterior wall of the second conduit (53) is widened at the end opening in the direction of the vessel (1) so that a nozzle (54) in which the liquid stream exiting from the end of the first conduit (51) is widened and sprayed is formed.

24. Apparatus according to Claim 16, **characterized in that** the rotatable vessel (1) has an axis of rotation running in the longitudinal direction of the vessel (1) which is inclined to the horizontal by an angle of from 50° to 90°, preferably from 70° to 80°.

25. Apparatus according to Claim 16, **characterized in that** functional internals (11) which serve for mixing of the support material are present in the interior of the rotatable vessel (1), especially lamellae projecting into the interior of the vessel.

## Revendications

1. Procédé de fabrication de catalyseurs en coquille comprenant les dispositions suivantes :

   a) préparation dans un récipient de réserve d'une composition contenant un liquide et un matériau catalytiquement actif et/ou un précurseur de ce dernier,
   b) préparation d'un matériau de support dans un récipient apte à tourner autour de son axe longitudinal,
   c) par un premier conduit, transport de la composition du récipient de réserve à une tuyère de pulvérisation,
   d) par un deuxième conduit, transport d'un fluide propulseur vers la tuyère de pulvérisation,
   e) pulvérisation de la composition et du fluide propulseur dans la tuyère pour former un aérosol qui pénètre dans le récipient et qui imprègne le matériau de support qui s'y trouve,
   f) chauffage du récipient (1) de telle sorte que le liquide que contient l'aérosol s'évapore du matériau de support et que le matériau de support sur lequel se trouvent le matériau catalytiquement actif et/ou le précurseur de ce dernier soit séché et
   g) évacuation ou aspiration hors du récipient du liquide qui s'est évaporé.

2. Procédé selon la revendication 1, **caractérisé en ce que** le fluide de pulvérisation est un gaz inerte qui est chauffé avant son transport dans le deuxième conduit et/ou pendant son transport dans le deuxième conduit.

3. Procédé selon la revendication 1, **caractérisé en ce que** la composition contenant un liquide et un matériau catalytiquement actif et/ou un précurseur de ce dernier est chauffée dans le récipient de réserve.

4. Procédé selon la revendication 1, **caractérisé en ce que** la composition contenant un liquide et un matériau catalytiquement actif et/ou un précurseur de ce dernier est refoulée dans le récipient de réserve par apport d'un fluide de pulvérisation dans le premier conduit ou hors de ce dernier par une pompe doseuse.

5. Procédé selon la revendication 1, **caractérisé en ce que** la composition contenant un liquide et un matériau catalytiquement actif et/ou un précurseur de ce dernier dans le récipient de réserve est une solution ou une dispersion d'un matériau catalytiquement actif et/ou d'un précurseur de ce dernier dans le liquide, la solution ou en particulier la dispersion pouvant être brassées dans le récipient de réserve.

6. Procédé selon la revendication 1, **caractérisé en ce que** le premier conduit s'étend à l'intérieur du deuxième conduit et **en ce qu'**une cavité concentrique par laquelle le fluide de pulvérisation est apporté à la tuyère est formée entre la paroi extérieure du premier conduit et la paroi intérieure du deuxième conduit.

7. Procédé selon la revendication 1, **caractérisé en ce que** comme tuyère, il utilise une tuyère d'expansion à ultrasons, de préférence une tuyère Laval ou une tuyère Venturi.

8. Procédé selon la revendication 1, **caractérisé en ce**

**que** le matériau de support dans le récipient monté à rotation est un matériau de support minéral, notamment un oxyde métallique ou du carbone.

9. Procédé selon la revendication 1, **caractérisé en ce que** l'axe de rotation du récipient monté à rotation s'étend dans le sens de la longueur de ce récipient et est incliné d'un angle de 20° à 75° par rapport à l'horizontale.

10. Procédé selon la revendication 1, **caractérisé en ce que** des garnitures fonctionnelles qui servent à mélanger intimement le matériau de support, notamment des lamelles débordant vers l'intérieur du récipient, sont situées à l'intérieur du récipient rotatif.

11. Procédé selon la revendication 1, **caractérisé en ce que** le matériau de support imprégné est extrait hors du récipient après l'évaporation du liquide et subit une calcination, en particulier à une température comprise entre 500 et 900°C.

12. Procédé selon la revendication 1, **caractérisé en ce que** qu'il comprend les dispositions suivantes :

    i) préparation d'une solution ou dispersion d'un matériau catalytiquement actif et/ou d'un précurseur de ce dernier dans un liquide placé dans une cuve de réserve (3),
    ii) préparation d'un matériau de support dans un récipient (1) apte à tourner autour de son axe longitudinal,
    iii) apport d'un gaz inerte (31) dans la cuve de réserve (3) de telle sorte que la solution ou dispersion qu'elle contient soient amenées dans un capillaire intérieur (51) à l'extrémité (52) duquel elles pénètrent dans une tuyère (54) d'expansion à ultrasons,
    iv) introduction d'un fluide propulseur (41) dans un capillaire extérieur (53) dans lequel s'étend le capillaire intérieur (51), de telle sorte que les deux capillaires (51, 53) définissent une cavité concentrique dans laquelle le fluide propulseur (41) se déplace avant de pénétrer dans la tuyère (54),
    v) pulvérisation du fluide propulseur (41) et de la solution ou dispersion dans la tuyère (54) de manière à former un aérosol qui pénètre dans le récipient (1), le jet d'aérosol s'évasant,
    vi) mise en contact de l'aérosol avec le matériau de support présent dans le récipient (1) de telle sorte que l'aérosol imprègne le matériau de support et que l'aérosol se dépose sur la surface du matériau de support et/ou dans ses couches proches de la surface,
    vii) chauffage du récipient (1) de telle sorte que le liquide que contient l'aérosol s'évapore hors du matériau de support et

    viii) évacuation ou aspiration hors du récipient (1) du liquide qui s'est évaporé.

13. Procédé selon l'une des revendication 1 à 12, **caractérisé en ce que** le fluide de pulvérisation et/ou la composition sont chauffés dans le récipient de réserve à une température telle qu'une partie du liquide que contient l'aérosol s'évapore dans le récipient dès avant que l'aérosol arrive sur le matériau de support, ce qui permet de contrôler la profondeur de pénétration de l'aérosol dans le matériau de support.

14. Procédé selon la revendication 1, **caractérisé en ce que** le récipient rotatif tourne en continu autour d'un axe qui s'étend dans le sens de la longueur de la tuyère de pulvérisation et en particulier dans un axe de rotation qui s'étend dans le sens de la longueur de la tuyère de pulvérisation, de préférence à une vitesse de rotation v = 3-300 min$^{-1}$ et de façon particulièrement préférable à une vitesse de rotation v = 10-30 min$^{-1}$.

15. Procédé selon la revendication 1, **caractérisé en ce que** la vitesse de pulvérisation d/dt $m_s$ = $\dot{m}_s$ de la composition contenant le liquide et le matériau catalytiquement actif et/ou le précurseur de ce dernier est réglée de telle sorte que s'établisse un rapport fonctionnel entre la vitesse de pulvérisation $\dot{m}_s$ et la vitesse d'évaporation d/dt $m_v$ = $\dot{m}_v$ du liquide, avec $\dot{m}_s$ = a. $\dot{m}_v$ et 0,5 < a < 3,5, de préférence 0,13 < a < 2,0 et de façon particulièrement préférable 0,9 < a < 1,0.

16. Ensemble servant à appliquer sur un matériau de support un matériau catalytiquement actif et/ou précurseur de ce dernier, l'ensemble contenant les éléments suivants :

    A) un récipient de réserve (3) prévu pour une composition contenant un liquide et un matériau catalytiquement actif et/ou précurseur de ce dernier,
    B) un récipient (1) pour un matériau de support, apte à tourner autour d'un axe longitudinal,
    C) une tuyère de pulvérisation (54) qui pénètre dans le récipient rotatif (1),
    D) un premier conduit (51) disposé entre le récipient de réserve (3) et la tuyère de pulvérisation (54) et servant à transporter la composition du récipient de réserve (3) à la tuyère de pulvérisation (54) et
    E) un deuxième conduit (53) qui sert à transporter un fluide propulseur (41) vers la tuyère de pulvérisation (54) .

17. Ensemble selon la revendication 16, **caractérisé en ce que** le récipient de réserve (3) est équipé d'un ensemble de brassage.

**18.** Ensemble selon la revendication 16, **caractérisé en ce que** le récipient de réserve (3) et le récipient rotatif (1) sont équipés de dispositifs de chauffage.

**19.** Ensemble selon la revendication 16, **caractérisé en ce qu'**un récipient de réserve (4) doté d'un dispositif de chauffage et relié au deuxième conduit (53) est prévu pour un fluide de pulvérisation et/ou **en ce que** le deuxième conduit (53) est équipé d'un dispositif de chauffage.

**20.** Ensemble selon la revendication 16, **caractérisé en ce que** le premier conduit (51) s'étend à l'intérieur du deuxième conduit (53) de telle sorte qu'entre la paroi extérieure du premier conduit (51) et la paroi intérieure du deuxième conduit (53) soit formée une cavité concentrique.

**21.** Ensemble selon la revendication 20, **caractérisé en ce que** la cavité concentrique présente un diamètre d'interstice qui multiplie la vitesse d'écoulement du fluide de pulvérisation qui s'écoule dans la cavité à une pression initiale prédéterminée du gaz et **en ce que** l'extrémité du deuxième conduit orientée en direction du récipient rotatif dispose d'une ouverture logarithmique de telle sorte qu'une tuyère (54) à ultrasons est formée.

**22.** Ensemble selon la revendication 16, **caractérisé en ce que** la tuyère (54) à ultrasons est une tuyère Laval ou une tuyère Venturi.

**23.** Ensemble selon la revendication 20, **caractérisé en ce que** l'extrémité du premier conduit (51) qui débouche dans la direction du récipient (1) est mobile dans la direction de son axe longitudinal et **en ce que** la paroi extérieure du deuxième conduit rieur (53) est évasée à son extrémité qui débouche dans la direction du récipient (1), de telle sorte qu'il se forme une tuyère (54) dans laquelle l'écoulement de liquide qui sort de l'extrémité du premier conduit (51) soit évasé et pulvérisé.

**24.** Ensemble selon la revendication 16, **caractérisé en ce que** l'axe de rotation du récipient rotatif (1) s'étend dans le sens de la longueur du récipient (1) et est incliné d'un angle de 50° à 90° et de préférence de 70° à 80° par rapport à la verticale.

**25.** Ensemble selon la revendication 16, **caractérisé en ce que** des garnitures fonctionnelles (11) qui servent à mélanger intimement le matériau de support, notamment des lamelles débordant vers l'intérieur du récipient, sont situées à l'intérieur du récipient rotatif (1).

Figur 1

Figur 2

Figur 3

**EP 2 986 377 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0599193 A1
- EP 2420317 A1
- EP 0672450 A1
- DE 2814262 A1
- DE 19734974 A1
- DE 19734975 A1
- DE 10233864 A1
- US 4858552 A1